# EUROPÄISCHE PATENTSCHRIFT

(11) **EP 0 450 365 B1**
(45) Veröffentlichungstag und Bekanntmachung des Hinweises auf die Patenterteilung: **28.06.1995**
(21) Anmeldenummer: 91103999.8
(22) Anmeldetag: 15.03.1991
(51) Int. Cl.: B65G 69/00

(54) **Vorrichtung an einem Gebäude mit Rampenüberladebetrieb**
Device on a building with loading ramps
Dispositif sur un bâtiment comportant des rampes de chargement

(30) Priorität: 04.04.1990 DE 4010756
(43) Veröffentlichungstag der Anmeldung: 09.10.1991
(73) Patentinhaber: ALTEN GERÄTEBAU GMBH, D-30974 Wennigsen (DE)
(72) Erfinder: Mayer, Heinz-Gerd, D-30952 Ronnenberg (DE)
(74) Vertreter: Depmeyer, Lothar

(56) Entgegenhaltungen:
- DE-U- 7 229 744
- US-A- 4 020 607
- US-A- 4 349 992
- US-A- 4 873 800

## Beschreibung

Die Erfindung betrifft eine Vorrichtung an einem Gebäude, insb. an einem Kühlhaus, mit Rampenüberladebetrieb, wobei zumindest eine schwenkbar gelagerte Überladebrücke vorgesehen ist, die sich mit ihrem freien Ende auf der Plattform des zu be- bzw. entladenden Fahrzeuges abstützt und nach unten hin in eine Rampenausnehmung schwenkbar ist.

Bei Gebäuden dieser Art besteht die Gefahr, dass Wärme- bzw. Kälteverluste während des Überladebetriebes eintreten, und zwar in besonderem Masse in den Bereichen, die sich unterhalb der in Betrieb befindlichen Überladebrücke befinden. Dies ist insb. dann der Fall, wenn die Rampenausnehmung nicht eine seitlich eng begrenzte Grube ist, sondern eine grössere Breitenerstreckung hat, um so z.B. die Überladebrücke seitlich verfahren zu können.

Der Erfindung liegt demgemäss die Aufgabe zugrunde, bei Gebäuden der eingangs erwähnten Art, die Wärme- bzw. Kälteverluste zu verringern.

Diese Aufgabe wird erfindungsgemäss durch die kennzeichnenden Merkmale des Anspruchs 1 gelöst.

Bevorzugte Ausführungsformen der Erfindung sind in den abhängigen Ansprüchen angegeben.

Die Überbrückung wird zweckmässigerweise seitlich geführt und derart aufgehängt, dass sie in einfacher Weise nach oben bzw. unten bewegt werden kann, um sie z.B. von einer Ruhestellung aus nach oben unter die Brückenplatte bewegen zu können, wobei die Anordnung auch so getroffen werden kann, dass die Überbrückung durch ihre Aufhängung mehr als ausgewogen ist und sogar die Tendenz besitzt, etwaigen Bewegungen der Brückenplatte beim Ladebetrieb zu folgen. Darüber hinaus erhält die Überbrückung auch eine solche Höhenerstreckung, dass diese zumindest der Tiefe der Rampenausnehmung entspricht, und zwar unter Berücksichtigung der Tatsache, dass sehr oft die zu be- bzw. entladenden Plattformen der Fahrzeuge tiefer sind als die Bodenflächen der Gebäude und demgemäss die Überladebrücke nach unten in die Rampenausnehmung verschwenkt werden muss.

Vorteilhaff ist ferner, dass die Überbrückung - vorzugsweise im Bereich ihres oberen Randes biegesteif ausgebildet ist, um evtl. Stösse durch das Fahrzeug abfangen zu können, wozu auch Anschlagpuffer benutzt werden können.

Weitere Einzelheiten der Erfindung werden anhand der Zeichnung erläutert, in der ein Ausführungsbeispiel der Erfindung dargestellt ist. Es zeigen :
- Fig. 1: eine Teilstirnansicht eines Kühlhauses,
- Fig. 2: einen Schnitt nach der Linie II - II von Fig. 1,
- Fig. 3: einen Schnitt nach der Lnie III - III von Fig. 1,
- Fig. 4: eine Einzelheite aus Fig. 1 nach dem Schnitt IV - IV und
- Fig. 5: eine Einzelheit aus Fig. 2 in vergrösserter Darstellung - jedoch im Gegensatz zu Fig. 1 mit in der Wirkstellung befindlicher Überbrückung -, und zwar in dem Bereich gemäss Pfeil V, der Linie V - V entsprechend gemäss Fig. 3.

Die Bodenfläche 1 des Kühlhauses wird zu den in Vielzahl vorgesehenen Öffnungen 2 des Gebäudes durch eine Kante 3 abgeschlossen, die eine längs zum Gebäude verlaufende Ausnehmung 4 ( Rampenausnehmung ) begrenzt. An der Kante 3 befindet sich eine Schiene 5 zum Führen und Halten des Schlittens 6 einer an ihrem hinteren Ende um eine waagrechte Achse verschwenkbaren Brückenplatte 7 einer Überladebrücke, die nach hinten in eine Steilstellung ( Ruhestellung, Verfahrstellung ) bewegt, aber auch zum Betrieb nach vorne in die Ausnehmung 4 herabgeschwenkt werden kann ( Betriebsstellung ).

Die nebeneinander liegenden Öffnungen 2, die bei ruhendem Betrieb durch ein Sektionaltor 8 od. dgl. abgeschlossen werden können, werden seitlich durch Pfeiler 9 begrenzt, die nach unten in die Ausnehmung 4 ragen. Zum Boden hin befindet sich noch eine Tasche 10, die für die Erfindung keine Bedeutung hat. Die Stirnfläche zwischen der Tasche 10 und der Ausnehmung 4 ist mit 11 bezeichnet.

Das zu be- bzw. entladende Fahrzeug ist gestrichelt dargestellt. Es hat eine Plattorm 12 und an der hinteren Stirnfläche Klapptüren 13. Weitere Einzelheiten sind nicht dargestellt und in üblicher Weise ausgebildet. Nicht dargestellt ist auch eine übliche Abdichtung, die die Aufbauten des Fahrzeuges seitlich und oben unter Verwendung eines kleinen Vorbaues abdichtet, was durch Schürzen und dgl. bewirkt werden kann.

Vor der Stirnfläche 11 ist eine steife Platte 14 angeordnet, und zwar aufrecht stehend in senkrechter Anordnung; sie besteht aus einem wärmedämmenden Werkstoff und ist an ihrem oberen Rand über ihre gesamte Länge hinweg mit einem Träger 15 versteift, der auch zur Halterung eines Puffers 16 als Stirnpuffer dienen kann. Am oberen Rand der Platte 14 kann noch eine Gummidichtung 16' angeordnet sein.

Diese Platte 14 ist geringfügig breiter als die Breite der Öffnung 2, um sie an den Öffnungsrändern mit Schienen 17 und Laufrädern 18 senkrecht führen bzw. nach oben und unten bewegen zu können.

Ferner sind zwischen Platte 14 und dem Gebäude noch weitere Dichtungen 19 vorgesehen, die senkrecht verlaufen. Im Bereich der Plattenenden ist die Platte 14 zudem durch senkrechte Seile 20 aufgehängt, die nach oben im Sturzbereich enden und dort aufwickelbar sind, um durch Gegenfedern od. dgl. die Seile 20 zum Halten und Tragen der Platte 14 ( Gewichtsausgleich ) zu befähigen. Die oben gelegene Wickelwelle ist mit 21 bezeichnet.

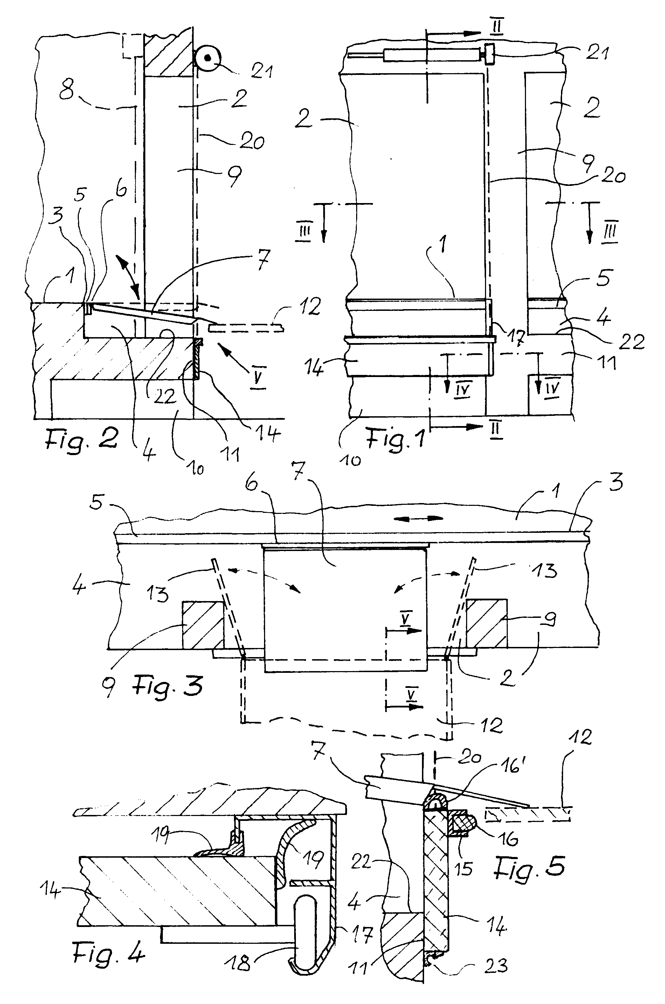

Zur Inbetriebnahme der Überladebrücke wird bei nach oben geschwenkter Brückenplatte 7 zunächst das Sektionaltor 8 geöffnet. Alsdann wird das Fahrzeug etwa in die Stellung gemäss Fig. 3 an die Rampe herangefahren; die Klapptüren 13 werden geöffnet ( Offenstellung gemäss Fig. 3 ). Alsdann wird die Platte 14 senkrecht angehoben, und zwar so lange, bis sie von unten an die Klapptüren 13 anstösst. Nunmehr wird die Brückenplatte 7 heruntergeklappt, damit sie sich mit ihrem freien Ende auf dem Fahrzeug abstützen kann ( Fig. 2 ). Sollte die untere Kante der Klapptüren 13 unterhalb der Brückenplatte 7 liegen, so erfährt die Platte 14 keine Lageveränderung. Ist jedoch die Brückenplatte 7 mit Vorsprüngen od. dgl. tiefer als die untere Kante der Klapptüren 13, so wird die Platte 14 um die Differenz nach unten verdrängt ( in Fig. 5 angenommen ). In beiden Fällen überbrückt die Platte 14 den Spalt zwischen der Sohle 22 der Ausnehmung 4 einerseits und der unteren Kante der Klapptüren 13 bzw. der Brückenplatte 7 andererseits. Diese Spaltüberbrückung erstreckt sich über die gesamte lichte Weite zwischen benachbarten Pfeilern 9. In diesem Bereich wird daher ein Abfliessen der Kälte praktisch unterbunden, zumal auch seitliche Abdichtungen ( Dichtungen 19 ) vorgesehen sind. Es wurde schon erwähnt, dass die Wärmedämmung oberhalb der Brückenplatte 7 bzw. zu beiden Seiten des Fahrzeugaufbaus und oberhalb des Aufbaus durch andere Vorrichtungen bewirkt wird , die nicht Gegenstand der Erfindung sind.

Es versteht sich, dass auch bei Nutzung der Dichtung 16' eine völlige Spaltüberbrückung unterhalb der Brückenplatte 7 bzw. den Klapptüren 13 nicht stattfinden kann, da Unebenheiten vorhanden sind. Die noch verbleibenden Durchbrüche können jedoch keine nennenswerten Schäden herbeiführen.

Nach Beendigung des Überladebetriebs und Abziehen des Fahrzeugs wird die Brückenplatte 7 wieder zurückgeklappt, die Platte 14 in die Stellung gemäss Fig. 1 und 2 zurückgeführt und schliesslich das Sektionaltor 8 geschlossen.

Um ferner eine verbesserte Dichtungswirkung der Platte 14 gegenüber der Stirnfläche 11 herbeiführen zu können, ist an der unteren waagerechten Kante bzw. dem Rand ein Dichtungsprofil befestigt, das diese Abdichtung herbeiführt und gemäss Fig. 5 mit 23 bezeichnet ist.

Weiterhin sollte auch im allgemeinen die Höhe der Platte 14 grösser sein als die Tiefe der Rampenausnehmung 4, um den Wirkungsbereich der Platte 14 zu vergrössern; in Verfolg dieses Gedankens kann die Platte 14 sogar eine Höhe erhalten, die etwa das Doppelte der vorerwähnten Tiefe beträgt, damit sie z.B. gemäss Fig. 2 mit ihrer oberen Kante bereits in Höhe der Bodenfläche 1 liegt.

Eine vorteilhafte Bedienung ergiht sich auch dann, wenn das Gegengewicht ( Rückstellkraft ) für die Platte 14 so gross gewählt wird, dass diese stets danach trachtet, sich nach oben zu bewegen, damit sie auch evtl. Betriebsbewegungen der Brückenplatte 7 folgen kann. Die Gegenkraft muss aber von Hand bzw. von der Bedienungsperson noch mit dem Fuss überwunden werden können. Somit kann die Platte 14 zur Eröffnung des Rampenbetriebes zunächst ihre höchste Stellung einnehmen, damit sie durch das Fahrzeug bei dessen Rücksetzbewegung nicht beschädigt wird und eine Berührung durch das Fahrzeug ggfs. nur am Puffer 16 bzw. der Plattenversteifung stattfinden kann. Ist das Fahrzeug bei dieser Stellung der Platte 14 an die Rampe herangeführt, so senkt die Bedienungsperson die Platte 14 z.B. mit dem Fuss ab und öffnet dann die Klapptüren 13. Entlastet die Bedienungsperson die Platte 14, so hebt sich die Platte 14 selbsttätig von unten her gegen die Klapptüren 13, worauf durch Verschwenken der Brückenplatte 7 auf die Plattform 12 der Ladebetrieb beginnen kann.

## Patentansprüche

1. Vorrichtung an einem Gebäude, insb. an einem Kühlhaus, mit Rampenüberladebetrieb, wobei zumindest eine schwenkbar gelagerte Überladebrücke (7) vorgesehen ist, die sich mit ihrem freien Ende auf der Plattform (12) des zu be- bzw. entladenden Fahrzeuges abstützt und nach unten hin in eine Rampenausnehmung (4) schwenkbar ist, gekennzeichnet durch eine wärmedämmende, heb- und senkbare, plattenartige Überbrückung (14), mit der zumindest ein grosserTeil des Spaltes zwischen der Sohle der Rampenausnehmung (4) einerseits und der Überladebrücke ( Brückenplatte 7 ) bzw. der unteren Kante des Fahrzeuges ( Klapptüren 13 ) abdeckbar ist.

2. Vorrichtung nach Anspruch 1, dadurch gekennzeichnet, dass die Überbrückung (14) zu beiden Seiten in senkrechten Führungen (17) gehalten ist.

3. Vorrichtung nach Anspruch 1 und 2, dadurch gekennzeichnet, dass die Überbrückung (14) an Seilen (20) aufgehängt ist, die derart unter einer Rückstellkraft stehen, dass diese das Gewicht der Überbrückung praktisch aufnimmt.

4. Vorrichtung nach Anspruch 1, dadurch gekennzeichnet, dass die Überbrückung (14) eine Breite hat, die geringfügig grösser ist als die lichte Breite der Gebäudeöffnung (2), über die der Überladebetrieb stattfindet.

5. Vorrichtung nach Anspruch 1 - 3, dadurch gekennzeichnet, dass sich eine zur Aufnahme der Seile (20) dienende Wickelwelle (21) oberhalb der Gebäudeöffnung zur Durchführung des Überladebetriebs befindet und an jedem Ende der Überbrückung (14) ein Seil angreift, die sich zu beiden Seiten der Gebäudeöffnung befinden.

6. Vorrichtung nach Anspruch 1, dadurch gekennzeichnet, dass die Überbrückung (14) vorzugsweise im Bereich ihres oberen Randes biegesteif verstärkt ist ( Träger 15 ).

7. Vorrichtung nach Anspruch 1, dadurch gekennzeichnet, dass sich am oberen Rand und/oder den seitlichen Rändern der Überbrückung (14) elastisch verformbare Dichtungen (16',19) zur Anlage am Gebäude bzw. an der Überladebrücke bzw. dem Fahrzeug befinden.

8. Vorrichtung nach Anspruch 1, dadurch gekennzeichnet, dass die Höhe der Überbrückung (14) grösser ist als die Tiefe der Rampenausnehmung (4).

9. Vorrichtung nach Anspruch 1, dadurch gekennzeichnet, dass die Überbrückung (14) mit einem oder mehreren Anschlagpuffern (16) für das Fahrzeug ausgestattet ist.

10. Vorrichtung nach Anspruch 1, gekennzeichnet durch die Verwendung bei Gebäuden mit nebeneinanderliegenden Gebäudeöffnungen zur Durchführung des Überladebetriebes und einer oder mehreren verfahrbaren Überladebrücken, denen eine von einer zur anderen Gebäudeöffnung durchgehende Rampenausnehmung zugeordnet ist.

11. Vorrichtung nach Anspruch 1, dadurch gekennzeichnet, dass die Überbrückung (14) vor der Stirnfläche (11) des Gebäudes angeordnet und dort heb- und senkbar geführt ist.

12. Vorrichtung nach Anspruch 1, dadurch gekennzeichnet, dass am unteren Rand der Überbrückung (14) eine Dichtung (23) gegenüber der benachbarten Stirnfläche (11) der Rampe vorgesehen ist.

13. Vorrichtung nach Anspruch 3, dadurch gekennzeichnet, dass die Rückstellkraft derart eingestellt ist, dass die Überbrückung (14) danach trachtet, sich nach oben zu bewegen, dass diese nach oben wirkende Kraft jedoch von Hand bzw. durch Fussbetätigung durch die Bedienungsperson überwindbar ist.

14. Vorrichtung nach Anspruch 8, dadurch gekennzeichnet, dass die Höhe der Überbrückung (14) im wesentlichen dem Doppelten der Tiefe der Rampenausnehmung (4) entspricht.

15. Vorrichtung nach Anspruch 8, dadurch gekennzeichnet, dass die Überbrückung (14) in ihrer Ruhestellung mit ihrer oberen Kante mit der Bodenfläche (1) des Gebäudes zumindest in etwa auf gleicher Höhe angeordnet ist, im übrigen aber den Spalt überdeckt und sich dabei noch über die Sohle (22) der Rampenausnehmung (4) hinaus nach unten erstreckt.

## Claims

1. Device on a building, more especially on a cold store, using a ramp loading operation, wherein at least one pivotably mounted loading bridge (7) is provided, which is supported with its free end on the platform (12) of the vehicle to be loaded or unloaded and is downwardly pivotable into a ramp recess (4), characterised by a heat-insulating, raisable and lowerable, plate-like bridging means (14), which can cover at least a large portion of the gap between the base of the ramp recess (4), on the one hand, and the loading bridge (bridge plate 7), or respectively the lower edge of the vehicle (hinged doors 13).

2. Device according to claim 1, characterised in that the bridging means (14) is retained at both sides in vertical guide members (17).

3. Device according to claims 1 and 2, characterised in that the bridging means (14) is suspended from cables (20), which are so subjected to a restoring force that such force practically absorbs the weight of the bridging means.

4. Device according to claim 1, characterised in that the bridging means (14) has a width which is slightly greater than the inside width of the building opening (2), over which the loading operation takes place.

5. Device according to claims 1 - 3, characterised in that a winding shaft (21), which serves to accommodate the cables (20), is situated above the building opening to effect the loading operation, and a cable engages with each end of the bridging means (14), such cables being situated at both sides of the building opening.

6. Device according to claim 1, characterised in that the bridging means (14) is preferably reinforced in the region of its upper edge so as to be resistant to bending (support member 15).

7. Device according to claim 1, characterised in that resiliently deformable seals (16', 19) are situated on the upper edge and/or on the lateral edges of the bridging means (14) for abutment against the building or respectively against the loading bridge or respectively against the vehicle.

8. Device according to claim 1, characterised in that the height of the bridging means (14) is greater than the depth of the ramp recess (4).

9. Device according to claim 1, characterised in that the bridging means (14) is provided with one or more stop buffers (16) for the vehicle.

10. Device according to claim 1, characterised by being used for buildings provided with adjacent building openings for effecting the loading operation and with one or more displaceable loading bridges, which have associated therewith a ramp recess which extends from one building opening to another.

11. Device according to claim 1, characterised in that the bridging means (14) is disposed in front of the end face (11) of the building and guided there in a raisable and lowerable manner.

12. Device according to claim 1, characterised in that a seal (23) is provided on the lower edge of the bridging means (14) for sealing with the adjacent end face (11) of the ramp.

13. Device according to claim 3, characterised in that the restoring force is so set that the bridging means (14) seeks to move upwardly, but this upwardly acting force can be overcome manually or by the operator using his foot.

14. Device according to claim 8, characterised in that the height of the bridging means (14) corresponds to substantially twice the depth of the ramp recess (4).

15. Device according to claim 8, characterised in that, in its inoperative position, the bridging means (14) is disposed with its upper edge at at least substantially the same height as the bottom face (1) of the building, but it also covers the gap and thereby extends downwardly beyond the base (22) of the ramp recess (4).

## Revendications

1. Dispositif installé sur un bâtiment, notamment sur un entrepôt frigorifique, et ayant un quai de transbordement, dans lequel il est prévu au moins un niveleur de quai (7) monté basculant, et qui prend appui, par son extrémité libre, sur la plate-forme (12) du véhicule devant être chargé ou déchargé et peut basculer vers le bas dans une fosse (4) du quai, caractérisé par une partie de recouvrement en forme de plaque (14), qui réalise un calorifugeage, qui peut être soulevée et abaissée et au moyen de laquelle au moins une grande partie de l'intervalle entre la base de la fosse (4) du quai d'une part et le niveleur de quai (tablier 7 de pont) ou le bord inférieur du véhicule (portes pivotantes 13) peut être recouverte.

2. Dispositif suivant la revendication 1, caractérisé par le fait que la partie de recouvrement (14) est maintenue des deux côtés dans des glissières verticales (17).

3. Dispositif suivant la revendication 1 ou 2, caractérisé par le fait que la partie de recouvrement (14) est suspendu à des câbles (20), qui sont soumis à une force de rappel telle que cette force compense pratiquement le poids de la partie de recouvrement.

4. Dispositif suivant la revendication 1, caractérisé par le fait que la partie de recouvrement (14) a une largeur qui est légèrement supérieure à celle de la baie (2) du bâtiment, par laquelle s'effectue l'opération de transbordement.

5. Dispositif suivant l'une des revendications 1 à 3, caractérisé par le fait qu'un axe d'enroulement (21), servant à recevoir les câbles (20), se trouve au-dessus de la baie du bâtiment utilisée pour l'opération de transbordement, et un câble est accroché à chaque extrémité de la partie de la partie de recouvrement (14), les câbles étant de part et d'autre de la baie du bâtiment.

6. Dispositif suivant la revendication 1, caractérisé par le fait que la partie de recouvrement (14) est renforcée, de manière à être résistante à la flexion (support 15), de préférence dans la région de bon bord supérieur.

7. Dispositif suivant la revendication 1, caractérisé par le fait que sur le bord supérieur et/ou sur les bords latéraux de la partie de recouvrement (14) se trouvent des garnitures d'étanchéité déformables élastiquement (16',19) destinées à s'appliquer sur le bâtiment ou sur le niveleur de quai ou sur le véhicule.

8. Dispositif suivant la revendication 1, caractérisé par le fait que la hauteur de la partie de recouvrement (14) est supérieure à la profondeur de la fosse (15) du quai.

9. Dispositif suivant la revendication 1, caractérisé par le fait que la partie de recouvrement (14) est équipée d'un ou de plusieurs butoirs (16) pour le véhicule.

10. Dispositif suivant la revendication 1, caractérisé par son utilisation dans des bâtiments comportant des baies disposées côte-à-côte, pour l'opération de transbordement, et une ou plusieurs passerelles de transbordement déplaçables, auxquels est associée une fosse de quai, qui s'étend continûment jusqu'à l'autre baie du bâtiment.

11. Dispositif suivant la revendication 1, caractérisé par le fait que la partie de recouvrement (14) est disposée en avant de la facade (11) du bâtiment et y est guidée de manière à pouvoir être soulevée et abaissée.

12. Dispositif suivant la revendication 1, caractérisé par le fait que sur le bord inférieur de la partie de recouvrement (14) est prévue une garniture d'étanchéité (23) en vis-à-vis de la facade (11) voisine de la rampe.

13. Dispositif suivant la revendication 3, caractérisé par le fait que la force de rappel est réglée de telle sorte que la partie de recouvrement (14) tend à se déplacer vers le haut, et que cette force dirigée vers le haut peut être vaincue manuellement ou bien au moyen d'un actionnement au pied, par l'opérateur.

14. Dispositif suivant la revendication 8, caractérisé par le fait que la hauteur de la partie de recouvrement (14) correspond essentiellement au double de la profondeur de la fosse (4) du quai.

15. Dispositif suivant la revendication 8, caractérisé par le fait que la partie de recouvrement (14) est disposée, dans sa position de repos, de telle sorte que son bord supérieur soit au moins à peu près au même niveau que le plancher (1) du bâtiment, mais recouvre par ailleurs l'intervalle et s'étend vers le bas au-delà du fond (22) de la fosse (4) du quai.
